# EUROPEAN PATENT SPECIFICATION

(11) **EP 4 158 206 B1**
(45) Date of publication and mention of the grant of the patent: **26.06.2024**
(21) Application number: 20729045.3
(22) Date of filing: 27.05.2020
(51) Int. Cl.: F16B 5/06, F16B 35/04, F16B 4/00, F16B 19/02

(54) **A FASTENING ELEMENT AND A VEHICLE ARRANGEMENT**
BEFESTIGUNGSELEMENT UND FAHRZEUGANORDNUNG
ÉLÉMENT DE FIXATION ET AGENCEMENT DE VÉHICULE

(43) Date of publication of application: 05.04.2023
(73) Proprietor: VOLVO TRUCK CORPORATION, 405 08 Göteborg (SE)
(72) Inventor: RAGOT, Sebastien, 413 11 GÖTEBORG (SE); OLSSON, Anders, 417 20 GÖTEBORG (SE); SAHAKIAN, Charles, 69150 Décines (FR); BOURSEGUIN, Laurent, 405 08 GÖTEBORG (SE); EJDERVIK, Erik, 405 08 GÖTEBORG (SE)
(74) Representative: Kransell & Wennborg KB
(86) International application number: PCT/EP2020/064629
(87) International publication number: WO 2021/239220

(56) References cited:
- EP-A1- 3 364 050
- WO-A1-2012/129212

## Description

### TECHNICAL FIELD

The present disclosure relates to a fastening element for retaining mechanical parts to each other. The present disclosure also relates to a vehicle arrangement comprising at least two mechanical parts and such a fastening element. Although the fastening element and vehicle arrangement will mainly be described in relation to a heavy-duty vehicle, i.e. a truck, they may also be applicable for other types of vehicles or arrangements where at least two parts are retained to each other.

### BACKGROUND

Mechanical parts, such as e.g. frame rails of a vehicle, are often subjected to high stresses and strains in different directions. These parts are conventionally connected to other parts by means of various types of joints. Such joints may, for example, be rivets, which are suitable for absorbing shear loads, or screw joints, which are suitable for absorbing tension and compression loads. With regards to screw joints, these type of joints have a limited shear load absorbency, due to the geometric play between the envelope surface of the screw and the opening/hole in the parts to be connected.

WO 2006/043863 presents a solution in which a fastening element, in the form of a screw, comprising a plurality of cutting machine grooves on the surface of the screw arranged within the hole. The cutting machine grooves are designed to work the edges of the hole during fixation so that material of the hole is removed. Hereby, the hole is made to fit against the shell surface of the screw, whereby both shear loads and compression/tension loads can be absorbed.

Although the fastening element in WO 2006/043863 solves the problem of absorbing both shear loads and compression/tension loads, it is still in need of further improvements. For example, the fastening element in WO 2006/043863 comprises a groove portion in the head of the screw, which reduces the mechanical stiffness. Also, the cutting machine grooves may reduce the ability of sustaining bending loads.

Further, EP 3 364 050 describes in its abstract an assembly comprising first and second structural elements having aligned holes, a fastener that occupies at least respective portions of the holes without a surrounding sleeve, and a mating part that is coupled to the fastener. Also, WO 2012/129212 describes in its abstract a fastening system that comprises a fastener and a single tool that provides both snugging torque and final tensioning to the fastener assembly, from a single side, with a single operator, with no torque feedback.

### SUMMARY

It is an object of the present disclosure to describe a fastening element which at least partially overcomes the above described deficiencies. This is achieved by a fastening element according to claim 1.

According to a first aspect, there is provided a fastening element for retaining mechanical parts to each other at an opening extending through the mechanical parts, the fastening element comprising a head portion arranged at a first axial end of the fastening element, the head portion comprising an abutment surface for abutment with one of the mechanical parts; a cylindrical portion extending axially from the head portion, the cylindrical portion being arranged for press-fit connection with the opening extending through the mechanical parts; and an elongated threaded portion extending axially from the cylindrical portion in a direction away from the head portion; wherein the fastening element further comprises a tool connecting portion arranged to receive a tool, the tool connecting portion being arranged at a second axial end of the fastening element.

The wordings "first axial end" and "second axial end" should be interpreted as opposite end sides of the fastening element, as seen in the axial extension of the fastening element. The first end side thus forms part of the head portion, while the second end side is arranged in the vicinity of the elongated threaded portion and the tool connecting portion.

An overall advantage is that the fastening element is able to sustain both shear loads, as it is designed to be press-fitted, i.e. interference fitted, in the opening of the mechanical parts. The fastening element is also able to sustain compression/tension loads. Hence, the fastening element is able to operate as a rivet as well as a screw/bolt. Thus, after tightening the fastening element, an improved shear and clamping force for the assembled configuration is achieved.

The inventors of the present disclosure have realized that by positioning the tool connecting portion at the second axial end, the head portion can be arranged as a solid portion. A further advantage is thus that the mechanical stiffness of the head portion can be increased. The ability to sustain bending loads is thus increased.

By means of the tool connecting portion, a tool can hold the fastening element substantially stationary when fixating the mechanical parts to each other. Preferably, a nut is used for tightening joint. The nut is introduced to the fastening element on the same side as the tool connecting portion.

According to an example embodiment, the tool connecting portion may comprise an axially elongated, non-threaded, protrusion. Preferably, and according to an example embodiment, the tool connecting portion may be formed as a male connecting part arranged to receive a female connecting tool part.

The non-threaded portion of the tool connecting portion is thus extending from the threaded portion and has a predetermined length. The length and configuration of the tool connecting portion should preferably be designed to fit the tool.

According to an example embodiment, the tool connecting portion may comprise a polygonal dog-point. Preferably, the polygonal dog-point may comprise at least six surface portions, each having a surface normal perpendicular to the axial extension of the fastening element.

According to an example embodiment, the head portion may comprise a flat head surface arranged on an opposite side of the head portion relative to the abutment surface.

The wording "flat head surface" should be construed such that the head surface is free from indentations, grooves or traces, etc. The flat head surface comprises a surface normal facing away from the axial extension of the fastening element, i.e. in an opposite direction compared to the surface normal of the abutment surface.

An advantage is that the fastening element can be forced through the opening by using a rivet gun exerting a pressure force on the flat head surface. The rivet gun can preferably be used as a complement to the nut tightening of the fastening element.

According to the invention, an intersection between the head portion and the cylindrical portion comprises a circumferential groove. An advantage is that stress concentrations between the head portion and the cylindrical portion during e.g. bending, are reduced.

According to an example embodiment, the cylindrical portion may be non-threaded.

Preferably, and according to an example embodiment, the cylindrical portion may comprise a flat envelope surface. By not machining or providing any other types of cutting machine grooves on the cylindrical portion, the overall ability to sustain bending loads is improved. The ability to sustain compression/tension loads is also improved as the cross-sectional area of the cylindrical portion is increased.

According to an example embodiment, the fastening element may further comprise a conical portion extending downwardly from the cylindrical portion towards the elongated threaded portion. The diameter of the cylindrical portion is thus larger than the diameter of the threaded portion.

An advantage of conical portion between the threaded portion and the cylindrical portion is that the conical portion is able to slide through the opening. Also, the mechanical parts are substantially self-centered when introducing the conical portion through the opening. Hence, an improved assembly procedure is obtained. The conical portion thus advantageously assists in self-centering the mechanical parts to be connected and aligns the openings of the mechanical parts.

According to a second aspect, there is provided a vehicle arrangement comprising at least two mechanical parts and a fastening element as described in relation to the first aspect retaining the mechanical parts to each other by connection at an opening extending through the at least two mechanical parts.

Effects and features of the second aspect are largely analogous to those described above in relation to the first aspect.

According to a third aspect, there is provided a vehicle comprising a vehicle arrangement according to any one of the embodiments described above in relation to the second aspect. Hence, effects and features of the third aspect are largely analogous to those describe above in relation to the first and second aspects. Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

The above, as well as additional objects, features and advantages, will be better understood through the following illustrative and non-limiting detailed description of exemplary embodiments, wherein:
Fig. 1 is a lateral side view illustrating a vehicle comprising mechanical parts particularly suitably retained by the fastening element according to an example embodiment;
Figs. 2a - 2b are perspective views of the fastening element according to an example embodiment; and
Figs. 3a - 3b are side views illustrating the mechanical parts during fixation of the fastening element according to an example embodiment.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

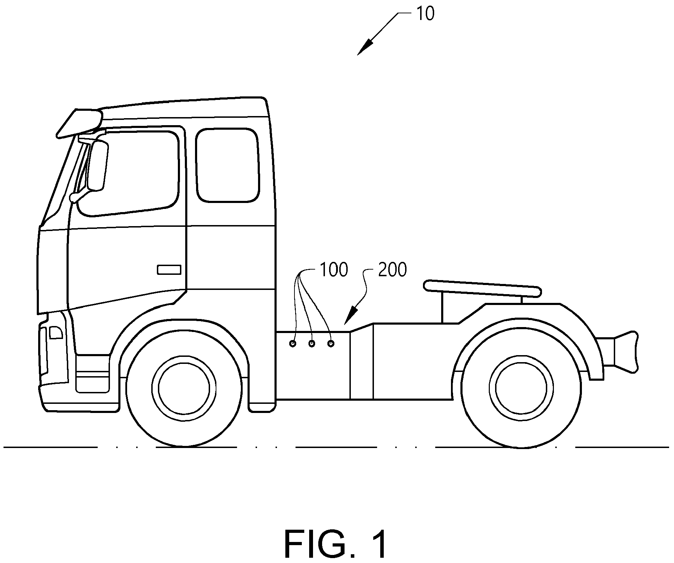

With particular reference to Fig. 1, there is provided a vehicle 10 in the form of a truck. The vehicle 10 comprises a frame structure composed of at least two frame portions, in the following referred to as mechanical parts 200. The mechanical parts 200 are retained to each other by means of a fastening element 100. In Fig. 1, three fastening elements 100 are illustrated side by side to each other. The fastening elements 100 may, of course, be arranged on a number of other positions on the vehicle.

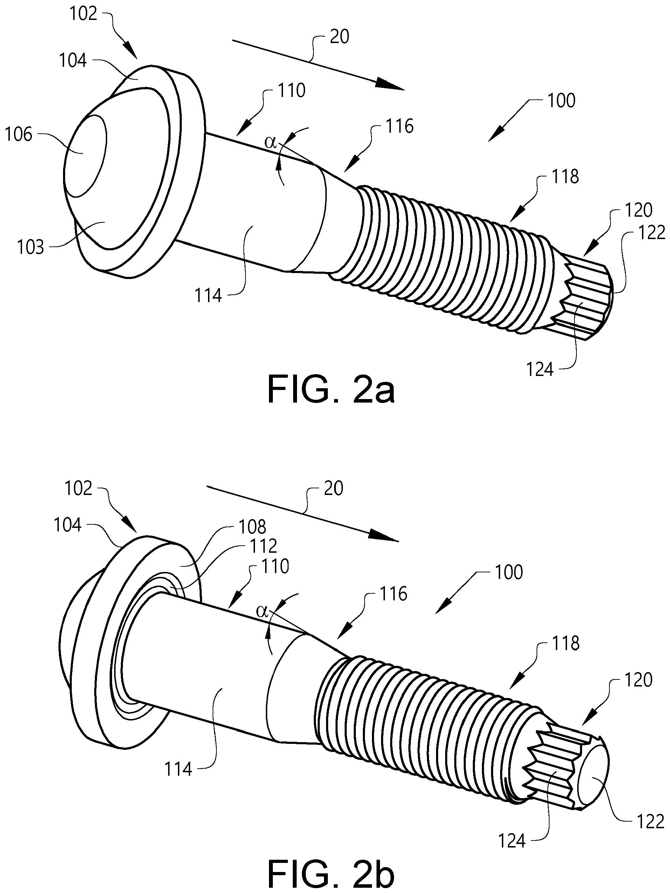

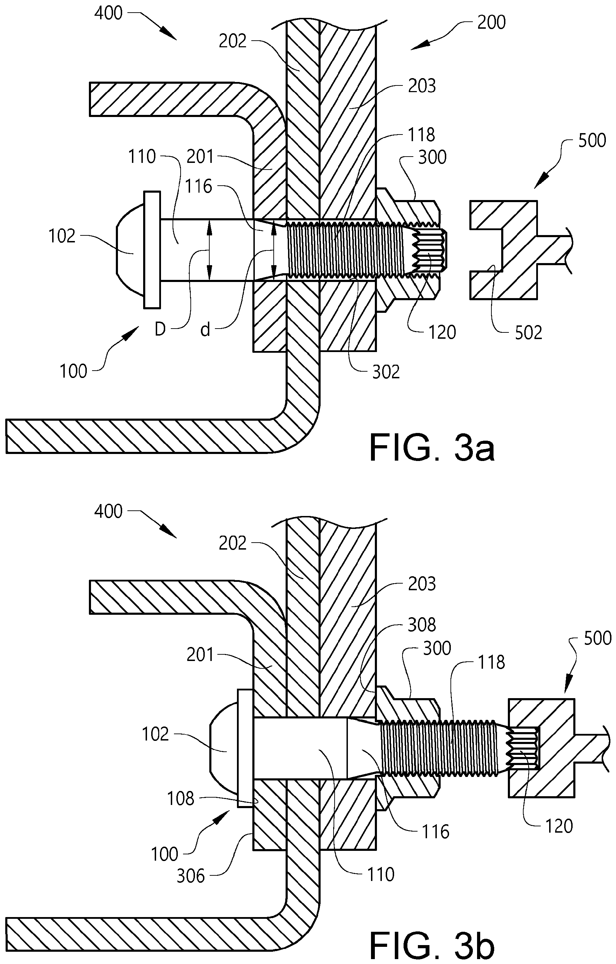

In order to describe the fastening elements 100 in further detail, reference is made to Figs. 2a - 2b illustrating an example embodiment thereof. As can be seen in Figs. 2a - 2b, the fastening element 100, which is in the form of a screw, comprises a head portion 102 arranged at a first axial end 104 of the fastening element 100. The head portion 102 comprises a protruding portion 103 and a flat head surface 106. The flat head surface 106 has a surface normal facing away from the axial extension 20 of the fastening element 100. The flat head surface 106 is thus a flat, level surface free from indentations, grooves, or the like. As such, a rivet gun (not shown) can suitably be used at the flat head surface 106 for forcing the fastening element 100 through an opening, as is illustrated and described in further detail below in relation to Figs. 3a-3b. As is illustrated, the flat head surface 106 is arranged in a circular shape. The diameter of the circular shape is preferably in the range between 10 - 15mm, more preferably in the range between 11 - 13 mm, and most preferably no more than 12 mm. Also, the protruding portion is preferably arranged with a radius in the range between 10 - 14 mm, more preferably in the range between 11 - 13 mm and most preferably approximately 12.5 mm. The head portion 102 further comprises an abutment surface 108 which is arranged to be in abutment with a surface of a mechanical part when assembled. The abutment surface 108 thus comprises a surface normal facing the axial extension 20 of the fastening element 100.

Moreover, the fastening element 100 comprises a cylindrical portion 110. The cylindrical portion 110 extends from the head portion 102 along the axial extension 20 of the fastening element 100. As is depicted, an intersection 112 between the head portion 102 and the cylindrical portion 110 is comprises a circumferential groove.

The cylindrical portion 110 comprises a flat envelope surface 114. The flat envelope surface 114 is thus non-threaded and free from indentations, grooves, or the like. Preferably, an axial extension, extending from the head portion 102, of the cylindrical portion is in the range between 20 - 30 mm, more preferably between 22 - 28 mm, and most preferably no more than 25 mm. Also, a cross-sectional diameter of the cylindrical portion 110 is preferably in the range between 12 - 18 mm, more preferably in the range between 13 - 17 mm, and most preferably in the range between 14 - 16 mm.

Furthermore, the fastening element 100 comprises a conical portion 116 extending downwardly from the cylindrical portion 110 in the direction of the axial extension 20. In a similar manner as the cylindrical portion 110, also the conical portion 116 comprises a flat envelope surface. Hence, the conical portion 116 is non-threaded and free from indentations, grooves, or the like. A length of the conical portion is preferably in the range between 5-10 mm, more preferably in the range between 6 - 9 mm, and most preferably no more than 7 mm. Further, the conical portion 116 comprises a downward inclination α from the cylindrical portion in the range between 10 - 15 degrees, more preferably in the range between 11 - 14 degrees, and most preferably approximately 13 degrees.

As is further illustrated in Figs. 2a - 2b, the fastening element 100 also comprises an elongated threaded portion 118. The elongated threaded portion 118 extends from the conical portion 116 and is arranged to receive a nut (see Figs. 3a - 3b). The extension of the elongated threaded portion is preferably in the range between 45 - 55 mm, more preferably in the range between 47 - 53 mm, and most preferably in the range between 48 - 50 mm. Furthermore, a pitch diameter of the threads is preferably in the range between 1-2 mm, most preferably approximately 1.5 mm. Still further, the elongated threaded portion is preferably dimensioned for an M14 nut.

The fastening element 100 also comprises a tool connecting portion 120 at a second axial end 122 thereof. The tool connecting portion 120 is arranged to receive a tool (500 in Figs. 3a - 3b) when retaining the mechanical parts 200 using the fastening element 100. Hence, the tool is connected to the tool connecting portion 120 for maintaining the fastening element 100 substantially stationary, at least to prevent rotation of the fastening element 100, during mounting.

As can be seen, the tool connecting portion 120 comprises an axially elongated, non-threaded protrusion formed as a male connecting part. The male connecting part is arranged to mate with a female connecting part (502 in Fig. 3a) of the tool. The axial elongation of the tool connecting portion 120 is preferably in the range between 5-15 mm, more preferably in the range between 7 - 13 mm, and more preferably in the range between 8-10 mm.

As is further illustrated, the tool connecting portion 120 comprises a polygonal dog-point 124 for connection to a corresponding design of the nut. In the illustration of Figs. 2a - 2b, the polygonal dog-point is a twelve-sided dog-point, comprising twelve surface portions. Each surface portion has a surface normal which is perpendicular to the axial extension 20 of the fastening element. Other polygonal dog-point configurations are also conceivable, such as e.g. comprising at least six surface portions.

Moreover, the material of the fastening element may be chosen as will best fit for the mechanical parts the fastening element 100 is arranged to retain. However, as a non-limiting example, the fastening element may be formed by steel of material class 10.9. This relatively hard material can advantageously sustain shear loads as well as tension/compression loads.

Turning now to Figs. 3a - 3b which illustrate a vehicle arrangement 400 comprising mechanical parts 200 and the fastening element 100 described above. In particular, Figs. 3a - 3b depict a vehicle arrangement 400 comprising three mechanical parts 201, 202, 203 retained to each other using the above described fastening element 100. The mechanical parts are in the exemplified embodiment formed by frame structure components and brackets of a vehicle. Fig. 3a illustrates the fastening element 100 in a pre-mounted state, while Fig. 3b illustrates the fastening element 100 in a mounted state retaining the three mechanical parts to each other.

Turning first to Fig. 3a, the fastening element 100 is introduced into an opening 302 formed through the mechanical parts 201, 202, 203. The opening 302 thus extends through the mechanical parts 201, 202, 203. In particular, the tool connecting portion 120, the elongated threaded portion 118 and the conical portion 116 is introduced into the opening 302. However, the cylindrical portion 110 is not yet introduced into the opening 302.

A nut 300 is screwed onto a part of the elongated threaded portion 118. The tool 500 is ready for receiving the tool connecting portion 120. In particular, a female portion 502 of the tool 500 is preferably enclosing the tool connecting portion 120 when the nut has been threaded onto the threaded portion 118 such that the tool connecting portion 120 is extending entirely out from the opening of the nut. Hereby, tool 500 can prevent rotation of the fastening element 100 when further fixating the nut 300. As is evident from the illustration of Fig. 3a, the tool 500 and the nut 300 are both positioned on the same side of the mechanical parts.

When mounting the fastening element 100 to its assembled position depicted in Fig. 3b, the fastening element 100 is kept stationary by means of the tool 500. The nut 300 is further screwed onto the elongated threaded portion 118. The diameter (d) of the opening 302 is smaller than the diameter (D) of the cylindrical portion 110. The fastening element 100 is thus forced through the opening 302 to press-fit the fastening element 100 to the mechanical parts, to thereby form an interference fit between the cylindrical portion 110 and the opening 302. Hereby, the fastening element 100 is able to suitably sustain shear loads as well as tension/compression loads. The abutment surface 108 of the head portion 102 is hereby abutting a surface of the first mechanical part 201. Also, a nut abutment surface 308 of the nut 300 is arranged in abutment with a portion of the third mechanical part 203.

As described above in relation to Figs. 2a - 2b, the head portion 102 is arranged with a flat head surface. In case an additional force is required for forcing the fastening element 100 through the opening 302, a rivet gun (not shown) can be used in addition to tightening of the nut 300. The rivet gun is thus applied to generate a force on the flat head surface in the direction of the axial extension 20 depicted in Figs. 2a - 2b.

It is to be understood that the present disclosure is not limited to the embodiments described above and illustrated in the drawings; rather, the skilled person will recognize that many changes and modifications may be made within the scope of the appended claims. For example, the various dimensions of the fastening element described above can be of course be varied to fit the opening of the mechanical parts it is to retain. The dimensions should also include material- and production tolerances.

## Claims

1. A fastening element (100) for retaining mechanical parts (200, 201, 202, 203) to each other at an opening (302) extending through the mechanical parts, the fastening element (100) comprising
- a head portion (102) arranged at a first axial end (104) of the fastening element (100), the head portion (102) comprising an abutment surface (108) for abutment with one of the mechanical parts;
- a cylindrical portion (110) extending axially from the head portion (102), the cylindrical portion (110) being arranged for press-fit connection with the opening (302) extending through the mechanical parts; and
- an elongated threaded portion (118) extending axially from the cylindrical portion (110) in a direction away from the head portion (102); wherein the fastening element (100) further comprises a tool connecting portion (120) arranged to receive a tool (500), the tool connecting portion (120) being arranged at a second axial end (122) of the fastening element (100),
**characterized in that** an intersection between the head portion (102) and the cylindrical portion (110) comprises a circumferential groove (112).

2. The fastening element (100) according to claim 1, wherein the tool connecting portion (120) comprises an axially elongated, non-threaded, protrusion.

3. The fastening element (100) according to any one of claims 1 or 2, wherein the tool connecting portion (120) is formed as a male connecting part arranged to receive a female connecting tool part (502).

4. The fastening element (100) according to any one of the preceding claims, wherein the tool connecting portion (120) comprises a polygonal dog-point (124).

5. The fastening element (100) according to claim 4, wherein the polygonal dog-point (124) comprises at least six surface portions, each having a surface normal perpendicular to the axial extension (20) of the fastening element (100).

6. The fastening element (100) according to any one of the preceding claims, wherein the head portion (102) comprises a flat head surface (106) arranged on an opposite side of the head portion (102) relative to the abutment surface (108).

7. The fastening element (100) according to any one of the preceding claims, wherein the cylindrical portion (110) is non-threaded.

8. The fastening element (100) according to any one of the preceding claims, wherein the cylindrical portion (110) comprises a flat envelope surface (114).

9. The fastening element (100) according to any one of the preceding claims, further comprising a conical portion (116) extending downwardly from the cylindrical portion (110) towards the elongated threaded portion (118).

10. A vehicle arrangement comprising at least two mechanical parts (201, 202, 203) and a fastening element (100) according to any one of the preceding claims, the fastening element (100) retaining the mechanical parts to each other by connection at an opening (302) extending through the at least two mechanical parts,.

11. A vehicle (10) comprising a vehicle arrangement according to claim 10.

## Patentansprüche

1. Befestigungselement (100) um mechanische Teile (200, 201, 202, 203) an einer Öffnung (302) aneinander festzuhalten, die sich durch die mechanischen Teile erstreckt, das Befestigungselement (100) umfassend
- einen Kopfabschnitt (102), der an einem ersten axialen Ende (104) des Befestigungselements (100) angeordnet ist, wobei der Kopfabschnitt (102) eine Anschlagfläche (108) zum Anschlagen an einem der mechanischen Teile umfasst;
- einen zylindrischen Abschnitt (110), der sich axial von dem Kopfabschnitt (102) erstreckt, wobei der zylindrische Abschnitt (110) für eine Pressverbindung mit der Öffnung (302) angeordnet ist, die sich durch die mechanischen Teile erstreckt; und
- einen länglichen Gewindeabschnitt (118), der sich axial von dem zylindrischen Abschnitt (110) in einer Richtung weg von dem Kopfabschnitt (102) erstreckt; wobei das Befestigungselement (100) ferner einen Werkzeugverbindungsabschnitt (120) umfasst, der angeordnet ist, um ein Werkzeug (500) aufzunehmen, wobei der Werkzeugverbindungsabschnitt (120) an einem zweiten axialen Ende (122) des Befestigungselements (100) angeordnet ist,
**dadurch gekennzeichnet, dass**
ein Schnittpunkt zwischen dem Kopfabschnitt (102) und dem zylindrischen Abschnitt (110) eine Umfangsnut (112) umfasst.

2. Befestigungselement (100) nach Anspruch 1, wobei der Werkzeugverbindungsabschnitt (120) einen axial länglichen, gewindefreien Vorsprung umfasst.

3. Befestigungselement (100) nach einem der Ansprüche 1 oder 2, wobei der Werkzeugverbindungsabschnitt (120) als ein männliches Verbindungsteil ausgebildet ist, das zur Aufnahme eines weiblichen Verbindungswerkzeugteils (502) angeordnet ist.

4. Befestigungselement (100) nach einem der vorhergehenden Ansprüche, wobei der Werkzeugverbindungsabschnitt (120) eine polygonale Ansatzspitze (124) umfasst.

5. Befestigungselement (100) nach Anspruch 4, wobei die polygonale Ansatzspitze (124) mindestens sechs Oberflächenabschnitte umfasst, die jeweils eine Oberflächennormale senkrecht zur axialen Erstreckung (20) des Befestigungselements (100) aufweisen.

6. Befestigungselement (100) nach einem der vorhergehenden Ansprüche, wobei der Kopfabschnitt (102) eine flache Kopffläche (106) umfasst, die auf einer gegenüberliegenden Seite des Kopfabschnitts (102) in Bezug auf die Anschlagfläche (108) angeordnet ist.

7. Befestigungselement (100) nach einem der vorhergehenden Ansprüche, wobei der zylindrische Abschnitt (110) kein Gewinde aufweist.

8. Befestigungselement (100) nach einem der vorhergehenden Ansprüche, wobei der zylindrische Abschnitt (110) eine flache Mantelfläche (114) umfasst.

9. Befestigungselement (100) nach einem der vorhergehenden Ansprüche, ferner umfassend einen konischen Abschnitt (116), der sich von dem zylindrischen Abschnitt (110) nach unten zu dem länglichen Gewindeabschnitt (118) erstreckt.

10. Fahrzeuganordnung umfassend mindestens zwei mechanische Teile (201, 202, 203) und ein Befestigungselement (100) nach einem der vorhergehenden Ansprüche, wobei das Befestigungselement (100) die mechanischen Teile durch Verbindung an einer Öffnung (302), die sich durch die mindestens zwei mechanischen Teile erstreckt, aneinander festhält.

11. Fahrzeug (10) umfassend eine Fahrzeuganordnung nach Anspruch 10.

## Revendications

1. Élément de fixation (100) servant à retenir des pièces mécaniques (200, 201, 202, 203) les unes sur les autres au niveau d'une ouverture (302) s'étendant à travers les pièces mécaniques, l'élément de fixation (100) comprenant
- une section sommitale (102) disposée à une première extrémité axiale (104) de l'élément de fixation (100), la section sommitale (102) comprenant une surface de butée (108) destinée à buter contre une des pièces mécaniques ;
- une section cylindrique (110) s'étendant axialement depuis la section sommitale (102), la section cylindrique (110) étant conçue pour établir une connexion par ajustement avec l'ouverture (302) s'étendant à travers les pièces mécaniques, et
- une section filetée allongée (118) s'étendant axialement depuis la section cylindrique (110) dans un sens détourné de la section sommitale (102) ; l'élément de fixation (100) comprenant en outre une section de connexion d'outil (120) conçue pour recevoir un outil (500), la section de connexion d'outil (120) étant disposée à une seconde extrémité axiale (122) de l'élément de fixation (100),
**caractérisé en ce qu'**une intersection entre la section sommitale (102) et la section cylindrique (110) comprend une gorge circonférentielle (112).

2. Élément de fixation (100) selon la revendication 1, dans lequel la section de connexion d'outil (120) comprend une saillie non filetée allongée axialement.

3. Élément de fixation (100) selon l'une quelconque des revendications 1 ou 2, dans lequel la section de connexion d'outil (120) est réalisée sous forme d'une pièce de connexion mâle conçue pour recevoir une pièce de connexion femelle (502).

4. Élément de fixation (100) selon l'une quelconque des revendications précédentes, dans lequel la section de connexion d'outil (120) comprend un téton polygonal (124) .

5. Élément de fixation (100) selon la revendication 4, dans lequel le téton polygonal (124) comprend au moins six sections de surface, chacune ayant une surface normale perpendiculaire à l'extension axiale (20) de l'élément de fixation (100).

6. Élément de fixation (100) selon l'une quelconque des revendications précédentes, dans lequel la section sommitale (102) comprend une section sommitale plate (106) disposée sur une face opposée de la section sommitale (102) par rapport à la surface de butée (108).

7. Élément de fixation (100) selon l'une quelconque des revendications précédentes, dans lequel la section cylindrique (110) n'est pas filetée.

8. Élément de fixation (100) selon l'une quelconque des revendications précédentes, dans lequel la section cylindrique (110) comprend une surface d'enveloppe plate (114).

9. Élément de fixation (100) selon l'une quelconque des revendications précédentes, comprenant en outre une section conique (116) s'étendant vers le bas depuis la section cylindrique (110) vers la section filetée allongée (118).

10. Agencement de véhicule comprenant au moins deux pièces mécaniques (201, 202, 203) et un élément de fixation (100) selon l'une quelconque des revendications précédentes, l'élément de fixation (100) retenant les pièces mécaniques l'une sur l'autre par connexion au niveau d'une ouverture (302) s'étendant à travers les au moins deux pièces mécaniques.

11. Véhicule (10) comprenant un agencement de véhicule selon la revendication 10.
